(19) Europäisches Patentamt
European Patent Office
Office européen des brevets

(11) EP 2 869 422 A1

(12) EUROPEAN PATENT APPLICATION

(43) Date of publication:
06.05.2015 Bulletin 2015/19

(51) Int Cl.:
H02J 3/12 (2006.01)    H02J 13/00 (2006.01)

(21) Application number: 13191383.2

(22) Date of filing: 04.11.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: ABB Technology AG
8050 Zürich (CH)

(72) Inventors:
• Maximini, Martin
  64683 Einhausen (DE)

• Slupinski, Adam
  68723 Schwetzingen (DE)
• Prause, Uwe
  68542 Heddesheim (DE)
• Kämpfer, Stefan
  68167 Mannheim (DE)

(74) Representative: Kock, Ina
ABB AG
GF-IP
Wallstadter Straße 59
68526 Ladenburg (DE)

(54) **Method and system for monitoring a grid voltage in a low voltage grid**

(57)    A method and a system are described for monitoring a grid voltage in a low voltage grid, where the low voltage grid (1) is connected through a local grid transformer (2) in a substation to a medium voltage grid (3) and where at least one power generation installation is connected to the grid. The following steps are performed: calculating a reference voltage rise in the grid ($\Delta u_{ref}$) under the assumption that at a given reference power flow on the low voltage side of the local grid transformer ($P_{Tr,ref}$) and at no loads, an exemplary distribution of the at least one power generation installation supplies a maximum power to the grid; determining the present voltage ($u_{LV,SS}$) and the present power flow ($P_{Tr}$) on the low voltage side of the local grid transformer from corresponding current and voltage measurements; determining the present voltage rise ($\Delta u$) from the ratio of the present power flow ($P_{Tr}$) to the reference power flow ($P_{Tr,ref}$); and determining the present critical voltage in the grid ($u_{LV,crit}$) as the sum of the present voltage ($u_{LV,SS}$) and the present voltage rise ($\Delta u$).

Fig. 3

EP 2 869 422 A1

**Description**

The invention relates to a low voltage grid, which is also known as local grid or electricity grid, and which provides electricity to consumers. The voltage level in low voltage (LV) grids is between 110 and 240 V, depending on the respective country. Commonly, a low voltage grid is connected through a local grid transformer in a local substation to a medium voltage grid, where the medium voltage grid may have a medium voltage (MV) level of between 10 and 72 kV. The local grid transformer may also be called MV/LV transformer.

In the past, low voltage grids were characterized only by the electrical loads connected to them and drawing electrical energy from them. However, the increasing presence of non-central energy generating installations leads to a rise in the voltage in these grids. Such energy generating installations are usually based on regenerative energy sources, like sun, wind and water power. In the case of low voltage grids, the non-central energy generating installations are mainly photovoltaic installations, feeding power to the grid both in rural areas as well as in residential areas.

The feeding of power to the low voltage grid results in an increase in the grid voltage which may result in a violation of the permissible absolute voltage range in the grid. In addition, another limit needs to be observed, namely the maximum relative voltage rise permitted at a given location in the grid. Accordingly, the power which may be delivered by a non-central generating installation is limited so as not to exceed the maximum voltage rise permitted for the connection point of the particular installation.

Today, in order to monitor the grid voltage of a low voltage grid for determining critical voltages, complex power flow calculations are carried out based on extensive grid load data and power generation data, as well as characteristic data for the grid topology and characteristic data for the resources and the equipment operating in the grid. This considerable amount of data is often either not available at all, or not with an adequate quality and timeliness. Further, the extensive power flow calculation which is then based on this data requires a complex modeling of the grid loads and the power generation. Since a new calculation must be made every time the grid load or the non-central power feed increases, this power flow based approach for monitoring the grid voltage of a low voltage grid requires considerable resources and effort.

As an alternative, the critical voltages can be determined by taking measurements throughout the low voltage grid at locations which are determined beforehand to be potentially critical. The determination of these critical locations requires again extensive power flow calculations for the whole grid. Usually, a considerable number of measurements is usually required, which results in the necessity of installing and operating not only the sensor units themselves but also the corresponding communication infrastructure for delivering the measurement results to the relevant processing devices.

If critical voltages are detected, i.e. if it is determined that the permitted absolute voltage range or relative voltage rise is violated, a voltage regulator, such as an on-load tap changer for the MV/LV transformer, may be used to regulate the grid voltage to a given set value. Current attempts at such voltage regulation are based on a fixed set value, or on the determination of an optimized set voltage value on the basis of distributed measurements at critical points in the low voltage grid.

From M. Maximini, "Abschätzung der Spannungsanhebung in Niederspannungsnetzen ohne Netzberechnung - neue Prozesse bei der Stadtwerke Duisburg Netzgesellschaft mbH", ew, 13/2013, pp. 72-75, it is known to benchmark multiple local grids with respect to their remaining capacity for connecting additional photovoltaic (PV) installations. The benchmarking then forms the basis for an administrative procedure for approving such additional PV installations.

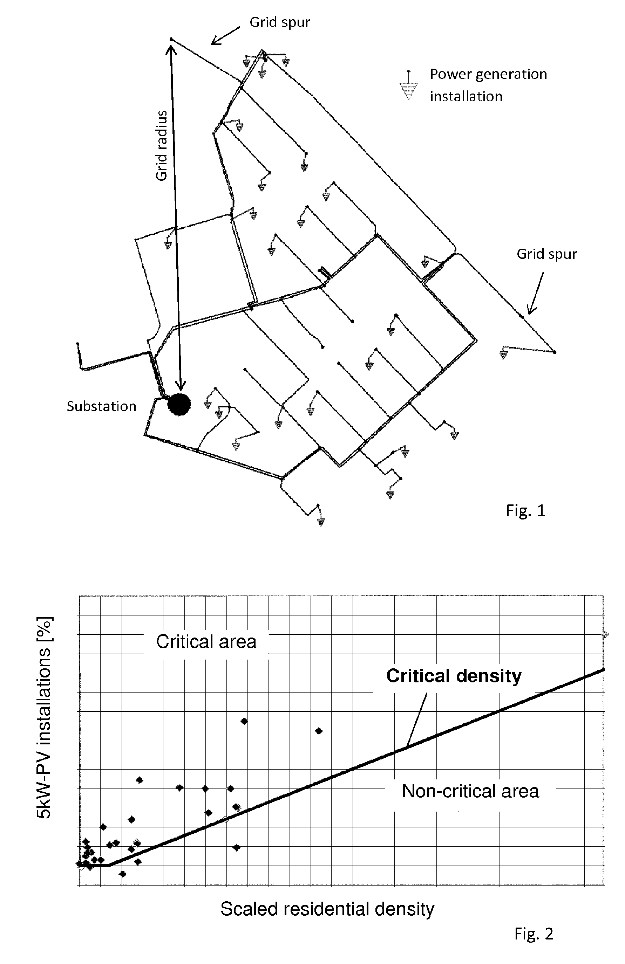

The benchmarking is performed in the following way: first, characteristic values of the grid structure are determined for all local grids in question. The characteristic values are for each of the grids: the number of housing units, the number of house connection lines, the number of existing PV installations, the summed up feed-in power of the existing PV installations, and the grid radius, i.e. the longest distance of a grid branch line or grid spur to the local substation (see Fig. 1). From these characteristic values, the following grid characteristics are derived: the average residential density, i.e. the number of housing units divided by the number of house connection lines; the average PV power, i.e. the summed up feed-in power divided by the number of existing PV installations; and the PV density, i.e. the number of PV installations divided by the number of house connection lines.

The average residential density is then converted into a scaled residential density for a grid radius of 300 meters; and from the average PV power and the PV density, a specific density is determined indicating for the local grid a percentage of PV installations with a power rating of 5 kW, assuming that these 5 kW PV installations are evenly distributed across the grid.

The scaled residential density and the specific density of 5 kW PV installations are then entered into a diagram and compared with a so called critical density of 5 kW PV installations, above which it will no longer be possible to abide with a maximum permitted voltage rise in case of a power infeed by the existing PV installations (see Fig. 2).

All local grids below the critical density line are potentially uncritical grids. The longer the distance of those grids from the critical density line, the larger their capacity for accepting additional PV installations.

Those grids which are above the critical density line are potentially critical grids. However, the paper is silent about what should be done about these potentially critical grids, and in particular, it does not mention the problem of ensuring that these potentially critical grids do not violate the absolute permitted voltage range.

It is an object of the present invention to provide a method and a system for monitoring a grid voltage in a low voltage grid which has at least one non-central power generation installation connected to it, in order to be able to predict undesired violations of the permitted voltage range and/or to control the grid voltage accordingly.

This object is achieved by a method and a system according to the independent claims.

In the method according to the invention, first a reference voltage rise in the grid is calculated under the assumption that at a given reference power flow on the low voltage side of the local grid transformer and at no loads, an exemplary distribution of the at least one power generation installation supplies a maximum power to the grid. Afterwards, the present voltage and the present power flow on the low voltage side of the local grid transformer are determined from corresponding current and voltage measurements. Then, the present voltage rise is determined from the ratio of the present power flow to the reference power flow, and finally, the present critical voltage in the grid is determined as the sum of the present voltage and the present voltage rise. The present critical voltage may then be compared with the permitted voltage range, and if the permitted voltage range is exceeded, a notification signal and/or a control signal may be generated and transmitted to a control device and/or a user interface.

The control device may be a voltage regulator in the local substation. In that case, the control signal may be a set value for the voltage regulator, the level of which is determined depending on the present critical voltage, and the set value may be transmitted to the voltage regulator either directly or via a superordinate control system.

The system according to the invention comprises at least one sensor unit for measuring at least one current and at least one voltage in the substation and/or at at least one low voltage feeder of the grid; and a data processing unit integrated in the at least one sensor unit or in a remote processing device, wherein the data processing unit is arranged for executing the method steps described here.

Opposed to the above described known methods for determining critical voltages, the solution described here avoids the resource intensive calculation of power flows for the whole grid. Instead, the power flow is determined only for the feeding point of the low voltage grid or - if the critical voltage is to be determined for a sub-grid of the low voltage grid - of the sub-grid. Accordingly, also the measurements need to be taken for the feeding point only. The automated monitoring of critical voltages can be performed in the local substation itself. In this way, multiple local grids that are equipped with the technology can be monitored for observing the maximum permitted voltage range as well as the maximum relative voltage rise without requiring extensive evaluations in high-level control systems on the basis of time series.

In order to further improve the accuracy of the determined critical voltage, a grid branch line extending from a meshed part of the low voltage grid may be taken into account by adding a corresponding voltage difference to both the reference voltage rise and the present voltage rise. The inventors have recognized the fact that in a grid branch line, also called grid spur, a voltage rise resulting from a power infeed may be significantly different in its level from the voltage rise occurring inside the meshed part of the grid. The difference in voltage rise may be reflected by a fixed value; and this fixed value may be taken into account both when determining the reference voltage rise in the grid as well as when determining the present critical voltage in the grid.

In case that the grid is a radial low voltage grid, the voltage values and the power flow values are determined for a sub-grid or for a grid branch line of the grid, at a corresponding low voltage feeder. In other words, in grids which are purely radial or which are radial containing one or more meshed sub-grids, the determination of the reference voltage rise, the measurement of the voltage and current values required for determining the present voltage and the present power flow, as well as the estimation of the present critical voltage may be carried out at each low voltage feeder or at a predetermined number of the low voltage feeders, treating the part of the grid that is fed from this feeder as a low voltage grid of its own.

In many countries, the low voltage grids have three phases. In this case, the voltage values and the power flow values may be determined for each phase individually, thereby taking into account asymmetrical infeed power provided by the power generation installations.

The above described method for determining a present critical voltage may be executed continuously or at least repeatedly. Accordingly, the comparison between the present critical voltage and the permitted voltage range, represented by an upper and a lower predetermined limit value, is performed continuously or repeatedly, as well. Every time the permitted voltage range is exceeded, corresponding information is stored so that the length of time and/or the number of times is determined during which the permitted voltage range was violated. When this length of time exceeds a predetermined maximum length of time or when this number of times exceeds a predetermined maximum number of times, a notification signal is generated and transmitted to a superordinate control system. In this way, unnecessary alerting of operations personnel due to random spikes in the present critical voltage is avoided.

Prior to performing the steps of determining the reference voltage rise and estimating the present critical voltage, it may be advantageous to first classify the low voltage grid according to the method described above, based on its characteristic values for the number of housing units, the number of house connection lines, the number of existing power generation installations, the summed up feed-in power of the existing power generation installations, and the grid radius. In this way, it becomes possible to first recognize for which low voltage grid critical voltages are likely to occur. The reference voltage rise and the present critical voltage are then determined only for those grids which are classified as potentially critical. As a result, the installation of sensor and processing units is limited to only those substations where the monitoring of the critical voltage is really required, thereby saving effort and resources.

The invention and its embodiments will become even more apparent from the example and its embodiments described below in connection with the appended drawings which illustrate:

Fig. 1    a low voltage grid with a substation and non-central power generation installations,
Fig. 2    a diagram illustrating the classification of low voltage grids into non-critical and critical,
Fig. 3    a schematic diagram of a meshed low voltage grid with one grid spur connected via a grid transformer to a medium voltage grid,
Fig. 4    a schematic diagram of a substation with a system for monitoring a grid voltage in a low voltage grid,
Fig. 5    a schematic diagram of a radial low voltage grid with meshed sub-grids and different grid spurs.

Fig. 1 shows the geographic pattern of the power lines of a low voltage grid, where the power lines are all fed from one substation. A considerable number of non-central power generation installations, in particular photovoltaic systems and wind generators, are unevenly distributed across the grid and are each connected to one of the power lines, sometimes at the very end of a line and sometimes right in the middle of a line. Many power lines are grid branch lines extending from the low voltage grid, i.e. being connected to the grid at one side only. The grid branch lines may also be called grid spurs, especially when they are particularly long. The grid radius is indicated by the double-headed arrow to be the longest distance of a grid spur to the local substation.

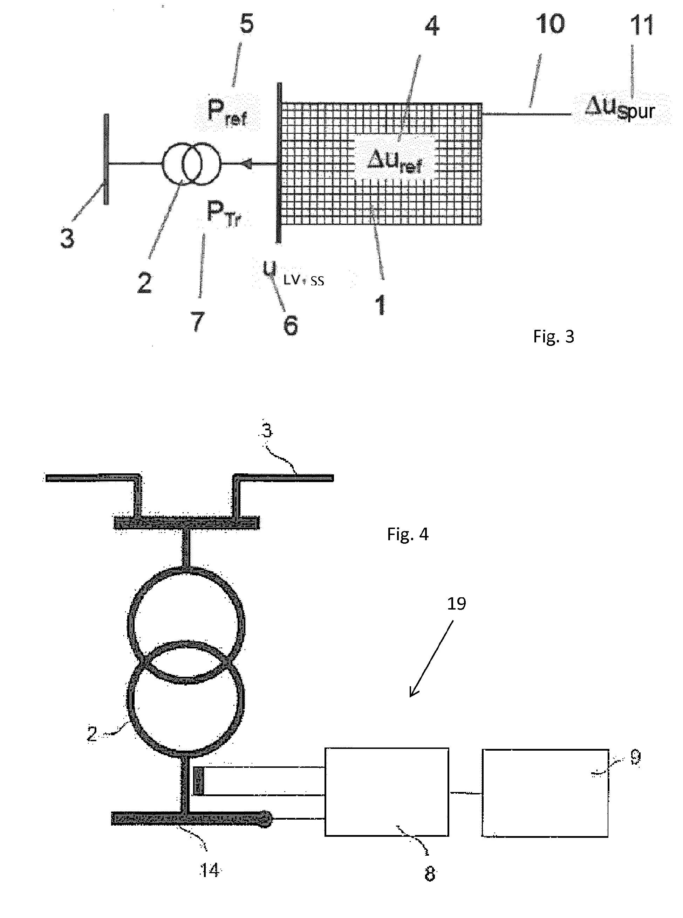

The present invention relates to such low voltage grids, which can also be represented in a different way, as shown in Fig. 3. The meshed part of the grid of Fig. 3 is referenced by 1, and one grid spur is shown, which is referenced by 10. In the local substation, the low voltage grid is connected through a local grid transformer to a medium voltage grid 3, where the transformer is called a MV/LV transformer 2.

In the past, these grids were characterized only by loads. The increasing presence, in particular in rural areas, of non-central power generating installations, in particular photovoltaic installations, leads to a rise in the voltage in these grids. This increase in the voltage can, at critical locations, on the one hand result in a violation of the permissible voltage range. On the other hand, the connectable power of non-central power generating installations is limited by the permitted voltage rise. If, as a result of the increasing presence of non-central installations or of an increasing load, violations of the voltage range occur in a low-voltage grid, a voltage regulator, for example an on-load tap changer, may be used at the MV/LV transformer 2 to regulate the voltage to a given set value. Former attempts at such voltage regulation have been based on a fixed set value, or on the determination of an optimized set voltage value on the basis of distributed measurements at critical points in the low voltage grid 1, 10.

The present solution is divided into multiple stages. In the first stage, which is not mandatory, the low voltage grid or a couple of low voltage grids are classified with respect to the expected level of the critical voltage on the basis of simple structural grid features. These are the housing development, characterized by the accommodation units per house connection line, and the radius of the local grid. From these values, a characteristic value is determined for the grid. Depending on this characteristic value, the presence of non-central power generation installations, i.e. the number of non-central generating installations and the total power supplied thereby, is used to perform the classification.

In a specific solution, the structural grid features are for each of the grids: the number of housing units, the number of house connection lines, the number of existing power generation installations, the summed up feed-in power of the existing power generation installations, and the grid radius. From these grid features, the following grid characteristics are derived: the average residential density, i.e. the number of housing units divided by the number of house connection lines; the average generated power, i.e. the summed up feed-in power divided by the number of existing power generation installations; and the power generation density, i.e. the number of power generation installations divided by the number of house connection lines.

The average residential density is then converted into a scaled residential density for a grid radius of 300 meters; and from the average generated power and the power generation density, a specific density is determined indicating for the local grid a percentage of power generation installations with a power rating of 5 kW, assuming that these 5 kW installations are evenly distributed across the grid.

The scaled residential density and the specific density of 5 kW installations are then entered into a diagram, as shown in Fig. 2, and compared with a so called critical density of 5 kW installations, above which it will no longer be possible to abide with a maximum permitted voltage rise in case of a power infeed by the existing power generation installations.

All local grids below the critical density line are potentially uncritical grids. The longer the distance of those grids from the critical density line, the larger their capacity for accepting additional power generation installations. All local grids above the critical density line are potentially critical grids, which are then regarded further as described below. The diagram of Fig. 2 can also be understood as a traffic light function, having two levels, the level 'green' which corresponds to 'not critical', and the level 'red' which corresponds to 'critical'. When a low voltage grid is classified as "critical", this means that an increase in its voltage up to the permissible voltage range or above is to be expected when the power generation installations feed in their power in this grid. In grids with the 'green' classification, significant reserves for the further construction of non-central power generation installations are still present. The classification can also be used to determine the specific density of power generation installations at which the local grid concerned falls into the critical range, where the specific density is based on an assumed standardized installation size,.

After the quantity of the low voltage grids is reduced by finding the potentially critical grids, the critical grids are further investigated. In the second stage of the present solution, a so called fingerprint of the local grid is determined by means of a power flow calculation based on a simplified grid model with non-central generating units, where the simplified grid model does not take into account any loads. This approach is used in order to estimate the critical voltage which is present in the grid, by means of measurements taken in the local substation only, not in the whole grid. If this present critical voltage exceeds a predetermined threshold value, a signal can be sent automatically to a higher-level control system. Additional measurements in the grid are not necessary. If a voltage regulator is employed to avoid violations of the voltage range, an optimum set value for the voltage regulation may be determined without additional measurements in the low voltage grid.

This second stage is now explained in more detail. If a grid is classified as 'critical', it is represented in a simplified form. Only the power feeds are considered, based on an exemplary distribution of the power generation installations, and no loads are taken into account. Based on the simplified representation of the grid, the expected maximum rise in voltage 4, $\Delta u_{ref}$, which is also called reference voltage rise, can be determined for an associated reference power flow 5, $P_{ref}$, through the local grid transformer 2. These values now serve as a reference scenario, or as the fingerprint, for the grid concerned.

During this second stage, the local substations concerned are also fitted with instrumentation 8 (Fig. 4) which can determine in the local substation the present voltage 6, $u_{LV,SS}$, as well as the present power flow 7, $P_{Tr}$.

Using the measured values, it is now possible to estimate the expected maximum voltage which is currently present, also called the present critical voltage $u_{LV,crit}$, by means of a simple combination of the voltage 6 measured in the local substation, the measured power flow 7, the power flow 5 of the reference scenario and the critical or reference voltage rise 4 for the reference scenario:

$$u_{LV,crit} = u_{LV,SS} + \Delta u_{ref} \cdot \frac{P_{Tr}}{P_{ref}}$$

The estimation of the present critical voltage $u_{LV,crit}$ is carried out locally in the measuring instrumentation or the measuring transducer (8) or in a further processing unit (9) in the local substation. The method described for the second stage applies basically to meshed low voltage grids 1. Voltage rises in grid spurs which, outside the meshing, demonstrate a significant voltage difference from the meshed grid, can be taken into account by means of a parameter $\Delta u_{spur}$, i.e. by a voltage difference 11 corresponding to a particular grid spur 10, so that for grid spurs the following equation applies:

$$u_{LV,crit} = f\left(u_{LV,SS}, \Delta u_{ref}, P_{Tr}, P_{ref}\right) + \Delta u_{spur} = u_{LV,SS} + \Delta u_{ref} \cdot \frac{P_{Tr}}{P_{ref}} + \Delta u_{spur}$$

This must be considered both when preparing the fingerprint and during the processing of the measured variables in the local substation.

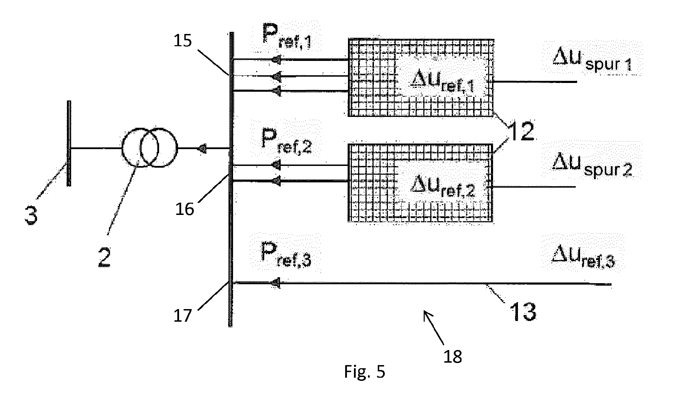

Fig. 5 shows a partially meshed grid, which is basically a radial grid 18, where two meshed sub-grids 12 and one grid spur (spur 3) are connected to the same feeding point, each via a low voltage feeder 15, 16, 17, respectively. Each of the meshed sub-grids 12 additionally contains a grid spur, spur 1 and spur 2, respectively.

In such a partially meshed grid or in a purely radial grid, the determination of the reference variables, the measurement of the required values and the consequent estimation of the present critical voltage can be carried out for each sub-grid 12 or each separate grid spur 13 individually. The calculation of the present critical voltage is performed by a data processing unit 9 belonging to the instrumentation 19 installed in the local substation (Fig. 4). Alternatively, the calculations may be performed by a further processing unit, such as a remote control system.

If three-phase measurements are taken, the second stage of the method can be extended to asymmetrical power feeds.

Further, it is possible for the calculation of the present critical voltage to take a tolerance band $\Delta u_{Tol}$ into account, such that the following applies:

$$u_{LV,crit} = f\left(u_{LV,SS}, \Delta u_{ref}, P_{Tr}, P_{ref}\right) + \Delta u_{Tol}$$

In the following, the third stage of the present method is described. After the present critical voltage has been determined by the instrumentation 19, i.e. the sensor and processing units of the substation (8, 9), it is compared with a predetermined set value. If it exceeds or falls below the predetermined set value, a signal is sent to a local voltage regulator and/or a user interface and/or a higher-level control system, allowing the risk of a violation of the voltage range in the relevant local grid (1) or even sub-grid (12, 13) to be detected and to be reacted to early. Through the automated voltage monitoring in the local substation itself, it can be ensured that multiple local grids that are equipped with this technology maintain their voltage within the permissible voltage range, without performing extensive evaluations in high-level control systems. A local substation transmits a signal to the high-level control system only when there is a risk of violating the permissible voltage range.

The monitoring can also be done on the basis of a predetermined frequency and duration, so that a signal is only sent to the superordinate control system when the violation of the permissible voltage range exceeds the predetermined duration and/or frequency. For the sake of a simple implementation of the method in the instrumentation and of an adaption to various local grids with different configurations and meshing, it is possible to consider different sub-grids automatically on the basis of the measurements at each outlet or feeder (15, 16, 17). In order to be able to apply the method in different local grids, the measurements for each outlet of the sub-grids which correspond to a previously determined fingerprint may be automatically collected and assigned to the respective fingerprint. This would be based on the input of which outlets are meshed with which other outlets.

If the expected maximum voltage, i.e. the present critical voltage, exceeds a specified threshold value with a specified frequency and/or duration, the local substation concerned may be fitted in a fourth stage with a voltage regulator or a controllable local grid transformer, if one of those is not yet present already. With the help of the method described above, the present critical voltage in the grid is determined, and on the basis of this expected maximum voltage, the set value for the voltage regulation can now be adjusted.

The fifth stage includes the regulation of the voltage in the local grid by the voltage regulator or by the controllable local grid transformer. The determination of the set value for the voltage regulator or for the controllable local grid transformer is done in such a way that the expected maximum voltage, i.e. the present critical voltage, should no longer exceed a specified threshold value. The determination of the set value is carried out in the data processing unit 9 of the at least one sensor unit 8, installed in the local substation, or in the further processing unit. It may be necessary in this stage to adjust the fingerprint to the modified power feed situation.

**Claims**

1. Method for monitoring a grid voltage in a low voltage grid, where the low voltage grid (1) is connected through a local grid transformer (2) in a substation to a medium voltage grid (3) and where at least one power generation installation is connected to the grid,
   **characterized by** the steps:

   • calculating a reference voltage rise in the grid ($\Delta u_{ref}$) under the assumption that at a given reference power flow on the low voltage side of the local grid transformer ($P_{Tr,ref}$) and at no loads, an exemplary distribution of the at least one power generation installation supplies a maximum power to the grid,
   • determining the present voltage ($u_{LV,SS}$) and the present power flow ($P_{Tr}$) on the low voltage side of the local grid transformer from corresponding current and voltage measurements,
   • determining the present voltage rise ($\Delta u$) from the ratio of the present power flow ($P_{Tr}$) to the reference power flow ($P_{Tr,ref}$),
   • determining the present critical voltage in the grid ($u_{LV,crit}$) as the sum of the present voltage ($u_{LV,SS}$) and the present voltage rise ($\Delta u$).

2. Method according to claim 1, wherein a grid branch line extending from a meshed part of the low voltage grid is taken into account by adding a corresponding voltage difference ($\Delta u_{spur}$) to both the reference voltage rise ($\Delta u_{ref}$) and the present voltage rise ($\Delta u$).

3. Method according to claim 1 or 2, wherein for a radial low voltage grid (18) the voltage values and the power flow values are determined for a sub-grid (12) or for a grid branch line (13) of the low voltage grid, at a corresponding low voltage feeder (15, 16, 17).

4. Method according to any of the previous claims, wherein the low voltage grid has three phases and wherein the voltage values and the power flow values are determined for each phase individually, taking into account asymmetrical infeed power provided by the power generation installations.

5. Method according to any of the previous claims, wherein

   • the present critical voltage is determined and compared with a predetermined limit value continuously or repeatedly,
   • the length of time and/or the number of times is determined during which the limit value is exceeded, and
   • a notification signal is generated and transmitted to a superordinate control system if the length of time exceeds a predetermined maximum length of time or the number of times exceeds a predetermined maximum number of times.

6. Method according to any of the previous claims, wherein depending on the present critical voltage a set value for a voltage regulator is determined and transmitted to the voltage regulator directly or to a superordinate control system.

7. Method according to any of the previous claims, wherein the voltage values and the power flow values are only determined for the low voltage grid if it was classified as a potentially critical grid based on its characteristic values for the number of housing units, the number of house connection lines, the number of existing power generation installations, the summed up feed-in power of the existing power generation installations, and the grid radius.

8. System for monitoring a grid voltage in a low voltage grid, where the low voltage grid (1) is connected through a local grid transformer (2) in a substation to a medium voltage grid (3) and where at least one power generation installation is connected to the grid, **characterized by** at least one sensor unit (8) for measuring at least one current and at least one voltage in the substation and/or at at least one low voltage feeder of the grid; and a data processing unit (9) integrated in the at least one sensor unit or in a remote processing device, wherein the data processing unit is arranged for

   • calculating a reference voltage rise in the grid ($\Delta u_{ref}$) under the assumption that at a given reference power flow on the low voltage side of the local grid transformer ($P_{Tr,ref}$) and at no loads, an exemplary distribution of the at least one power generation installation supplies a maximum power to the grid,
   • determining the present voltage ($u_{LV,SS}$) and the present power flow ($P_{Tr}$) on the low voltage side of the local grid transformer from the corresponding current and voltage measurements,
   • determining the present voltage rise ($\Delta u$) from the ratio of the present power flow ($P_{Tr}$) to the reference power flow ($P_{Tr,ref}$),
   • determining the present critical voltage in the grid ($u_{LV,crit}$) as the sum of the present voltage ($u_{LV,SS}$) and the present voltage rise ($\Delta u$).

9. System according to claim 8, wherein the data processing unit is further arranged to perform any of the method steps of previous claims 2 to 7.

Fig. 1

Fig. 2

Fig. 3

Fig. 4

Fig. 5

Europäisches
Patentamt
European
Patent Office
Office européen
des brevets

## EUROPEAN SEARCH REPORT

**Application Number**

EP 13 19 1383

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/065199 A2 (OCHENBAUER ROLAND [AT]) 24 May 2012 (2012-05-24) * page 1, lines 13-24; claims 4-6 * * page 5, line 27 - page 10, line 1; figure 1 * ----- | 1-9 | INV. H02J3/12 H02J13/00 |
| X | US 2013/184894 A1 (SAKUMA HISATO [JP] ET AL) 18 July 2013 (2013-07-18) * paragraphs [0001] - [0008] * * paragraphs [0039] - [0118]; figures 1-5 * ----- | 1,8 | |
| A | DE 10 2008 057563 A1 (INST SOLARE ENERGIEVERSORGUNGS [DE]) 30 September 2010 (2010-09-30) * paragraphs [0010], [0021] - [0023]; claim 1; figures 1-5 * ----- | 1-9 | |

|  |
|---|
| TECHNICAL FIELDS SEARCHED (IPC) |
| H02J |

The present search report has been drawn up for all claims

| Place of search | Date of completion of the search | Examiner |
|---|---|---|
| Munich | 26 March 2014 | Le Guay, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 19 1383

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2014

| Patent document cited in search report | Publication date | Patent family member(s) | Publication date |
|---|---|---|---|
| WO 2012065199 A2 | 24-05-2012 | AT 509697 A4<br>DE 112011103818 A5<br>WO 2012065199 A2 | 15-10-2011<br>14-08-2013<br>24-05-2012 |
| US 2013184894 A1 | 18-07-2013 | US 2013184894 A1<br>WO 2012063800 A1 | 18-07-2013<br>18-05-2012 |
| DE 102008057563 A1 | 30-09-2010 | DE 102008057563 A1<br>EP 2400616 A2 | 30-09-2010<br>28-12-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MAXIMINI.** *Abschätzung der Spannungsanhebung in Niederspannungsnetzen ohne Netzberechnung - neue Prozesse bei der Stadtwerke Duisburg Netzgesellschaft mbH,* 2013, 72-75